# EUROPEAN PATENT SPECIFICATION

(11) **EP 2 582 635 B1**
(45) Date of publication and mention of the grant of the patent: **14.05.2014**
(21) Application number: 11726410.1
(22) Date of filing: 16.06.2011
(51) Int. Cl.: A23L 2/50, A23L 2/54, C02F 1/68

(54) **PROCESS FOR THE PREPARATION OF A DILUTABLE LIQUID CONCENTRATE TO OBTAIN WATER DESTINED FOR HUMAN CONSUMPTION AND HAVING THE CHARACTERISTICS OF A NATURAL MINERAL WATER**
VERFAHREN ZUR HERSTELLUNG EINES VERDÜNNBAREN FLÜSSIGEN KONZENTRATS FÜR DEN ERHALT VON TRINKWASSER MIT DEN EIGENSCHAFTEN EINES NATÜRLICHEN MINERALWASSERS
PROCÉDÉ POUR PRÉPARER UN CONCENTRÉ LIQUIDE DILUABLE AFIN D'OBTENIR UNE EAU DESTINÉE À LA CONSOMMATION HUMAINE ET AYANT LES CARACTÉRISTIQUES D'UNE EAU MINÉRALE NATURELLE

(30) Priority: 16.06.2010 IT MI20101093
(43) Date of publication of application: 24.04.2013
(73) Proprietor: Berger, Simona, 20080 Basiglio (IT); Scardino, Epifanio, 20080 Basiglio (Milano) (IT)
(72) Inventor: BERNAZZANI, Luca, I-58100 Grosseto (IT)
(74) Representative: Rapisardi, Mariacristina
(86) International application number: PCT/EP2011/060002
(87) International publication number: WO 2011/157783

(56) References cited:
- EP-A1- 1 726 571
- EP-A2- 1 460 042
- WO-A1-01/98216
- WO-A2-2004/103097
- DE-A1-102007 031 196

## Description

The present invention relates to a process for the preparation of a dilutable liquid concentrate to obtain water destined for human consumption and having the characteristics of a natural mineral water or not present in nature.

The document WO 01/98216 A1 discloses a method for producing calcium rich water from a weakly mineralised water.

From a chemical point of view the preparation of water destined for human consumption obtained by remineralisation of water virtually devoid of ions is a complex problem, especially if starting, for practical reasons, from a liquid concentrate produced on an industrial scale and then sold in quantities dilutable on site as needed to produce the final product.

The first thing to note is that the most common ions present in natural waters are essentially Calcium, Magnesium and Bicarbonate followed by Sodium, Potassium, Chloride and Sulphate. In addition, the chemical composition of natural mineral waters suggests that the most abundant species is Calcium Bicarbonate (Calcium hydrogen carbonate).

The first problem in obtaining a dilutable liquid concentrate for the production of "synthesis" mineral water characterized by a reasonable calcocarbonic balance is therefore that Calcium Bicarbonate (as opposed to Carbonate) does not exist in solid form, but only in an aqueous solution.

The second problem to be taken into account is the possible precipitation of salts in the liquid concentrate either during its preparation, or over time as a result of changes in temperature, exposure to UV rays, etc. In practice, the most critical aspect concerns the possible precipitation of Calcium Carbonate.

The technical solution the present invention proposes is, therefore, to realize a process and plant for the preparation of a dilutable liquid concentrate to obtain water destined for human consumption and having the characteristics of a natural mineral water or not present in nature without the technical drawbacks of prior art.

In the sphere of this technical solution, an object of the invention is to implement a process to prepare a dilutable liquid concentrate to obtain water destined for human consumption and having the characteristics of a natural mineral water or not present in nature, in which the produced liquid concentrate has a reasonable calcocarbonic balance and a negligible quantity or zero precipitated salts, particularly Calcium Carbonate.

Another object of the invention is the preparation of a dilutable liquid concentrate to obtain water destined for human consumption and having the characteristics of a natural mineral water or not present in nature, the production process of which results in a reasonable calcocarbonic balance and a negligible quantity or zero precipitated salts, particularly Calcium Carbonate, in the liquid concentrate despite being very simple, effective and safe for the consumer.

The technical solution, including these and other objects, according to the present invention is achieved by implementing a process for the preparation of a dilutable liquid concentrate to obtain water destined for human consumption and having the characteristics of a natural mineral water or not present in nature, characterized in that it comprises the following steps:
- saturation with CO₂ of a first quantity of sterilized and demineralised water
- enrichment with Calcium Bicarbonate of said first quantity of water saturated with CO₂
- dissolution of other mineral salts in said first quantity of water saturated with CO₂
- dilution of the first quantity of water saturated with CO₂ and having all desired mineral salts comprising the Calcium Bicarbonate with a second quantity of sterilized and demineralised water in such a way as to obtain a liquid concentrate having a concentration of CO₂ at least sufficient to prevent the precipitation of Calcium Carbonate from the Calcium Bicarbonate.

Preferably, said liquid concentrate is sterilized with UV rays before its final packaging.

Preferably the dilution phase is realized in a hermetically closed mixer in which a slight head of CO₂ is created above the solution.

In a first preferred embodiment of the invention, for the enrichment in Calcium Bicarbonate, Sodium and/or Potassium Bicarbonates are added to the first quantity of water saturated with CO₂ after the addition of Calcium salts.

Preferably, for the calculation of the minimum quantity of CO₂ necessary to prevent the precipitation of Calcium Carbonate, the concentration of the Calcium ion to be solubilised is established in advance; the balance of the first and second dissociation of the carbonic acid, of the ionic product of the water and of the solubility product of the CaCO₃ are evaluated analytically; the mass and charge balances of the system are set; the total ionic strength of the concentrate to be prepared is determined and, according to a suitable model, the estimation of the activity coefficients of all involved ionic species is carried out; and with an iterative method, by varying the content of CO₂, the corresponding activity of the hydrogen ion is calculated and from this the distribution of the free species of carbonate, hydrogen carbonate and carbon dioxide are calculated.

Preferably, the dilution ratio of the liquid concentrate to obtain mineral water ready for consumption is comprised in a range between 1:10 and 1:60.

Finally, the present invention comprises a dilutable liquid concentrate production plant to obtain water destined for human consumption and having the characteristics of a natural mineral water or not present in nature, characterized in that it comprises an inverted-osmosis demineralizer for the preparation of demineralized water, sterilization means for the demineralized water connected in cascade to said demineralizer, first and second storing means of sterilized demineralized water connected in cascade to said sterilizing means, saturation means with CO₂ of said sterilized water present in said first storing means, a hermetically closed mixer connected in cascade to said first and second storing means, means for the creation of a head of CO₂ above the saline solution present inside said hermetically closed mixer, and packaging means for the liquid concentrate connected in cascade to said mixer.

Additional characteristics and advantages of the invention will be more evident from the description of a preferred, but not exclusive, embodiment of the process and plant for the preparation of a dilutable liquid concentrate to obtain water destined for human consumption and having the characteristics of a natural mineral water or not present in nature, according to the invention, illustrated by way of non-limiting example in the annexed drawings, in which:

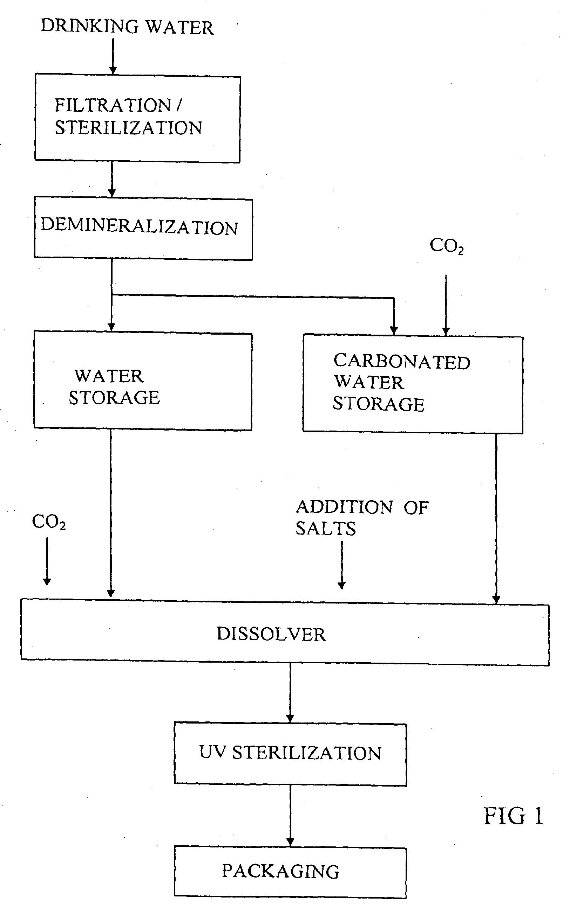

figure 1 shows a block diagram of a first preferred embodiment of the production process for the preparation of the liquid concentrate; and

The process for the preparation of the dilutable liquid concentrate to obtain water destined for human consumption and having the characteristics of a natural mineral water or not present in nature is as follows:
Demineralized water is prepared by means of a suitable reverse osmosis demineralizer.

The demineralized water is sterilized by suitable sterilization means.

A first quantity of sterilized demineralized water is placed in the first storing means and the other quantity of sterilized demineralized water is placed in the second storing means.

The first quantity of water is saturated with CO₂ using an appropriate saturation means with CO₂.

The first quantity of water saturated with CO₂ is enriched in Calcium Bicarbonate. The other minerals present in the desired mineral water are dissolved in the first quantity of water saturated with CO₂.

In a hermetically closed mixer the first quantity of water saturated with CO₂ and having the various minerals is diluted with a second quantity of sterilized demineralized water coming from the second storage means.

The dilution of the first quantity of water with the second quantity of water enables the attainment of the desired ion concentrations.

The desired CO₂ content is obtained by varying the ratio between the first and second quantity of water.

Furthermore, after adding the mineral salts to the first quantity of water saturated with CO₂ and after the same is diluted with the second quantity of water, a slight head of CO₂ is created above the saline solution in the hermetically closed mixer through suitable CO₂ supply means.

The slight head of CO₂ in the hermetically closed mixer has many advantages: it compensates for any loss of CO₂ suffered by the first quantity of water saturated with CO₂ during the addition of salts; the slight over-pressure created within the hermetically closed mixer also prevents the entry of contaminants and promotes the flow of liquid concentrate towards the packaging means connected in cascade to the mixer.

In a first preferred embodiment, the previously and accurately weighed minerals are dissolved in the mixer equipped with a stirrer of mineral salts, and the Calcium and Bicarbonate species are introduced separately, the first for example as a Sulphate or as a Chloride or even as a Hydroxide, and the second as Sodium and/or Potassium Bicarbonate, taking care to add the Sodium and/or Potassium Bicarbonates to the mixture only at the end. The latter prevents the formation of local concentrations of the Ca²⁺ ion in a carbon environment that could trigger the precipitation of CaCO₃, a possible event if the Calcium salts are added at the end. The production process of the liquid concentrate enables the attainment of satisfactory levels of Calcium without excessively high concentrations of Chloride and Sulphate (Chlorides and especially Sulphates give water a bitter taste), and to attain adequate levels of Bicarbonate maintaining acceptable concentration levels of Sodium and Potassium.

This is achieved without appreciable precipitation of salts, particularly Calcium Carbonate, in the liquid concentrate during its preparation, or over time as a result of changes in temperature, exposure to UV rays, etc.

The problem occurs due to the further dissociation of the hydrogen Carbonate ion, which is partly transformed into Carbonate. Even a fraction of hydrogen Carbonate equal to 0.001 % that transforms into Carbonate may, in certain cases, result in the precipitation of Calcium Carbonate. The phenomenon is countered by lowering the pH in order to substantially reduce the further dissociation of Bicarbonate into Carbonate. The procedure identified by the applicants, among the various possibilities, advantageously foresees the precautionary addition of CO₂. The choice of CO₂ is extremely advantageous because it is already present in solution in the distribution of the species formally derived from the dissociation of the hydrogen Carbonate ion and because it does not add any risk of harm to the operator during the preparation of the concentrate or for the final consumer. Indeed, even if the consumer should accidentally swallow the concentrate rather than diluted final product, the CO₂ content would never exceed the limit of solubility of the carbon dioxide (thus the effect would be simply to take carbonated water), which, in other words, means that there is no risk of overdose. There would be potentially harmful effects in the case of overdose if any aqueous mineral acid such as hydrochloric acid (again considering the case of accidental ingestion of concentrate) were used for the acidification of the water, not to mention the risks associated with the handling of hazardous substances for the operators during the preparation of the concentrate. On the other hand, the use of other acidifying agents widely used in the food industry (such as citric acid), although produced from a natural source, would change the nature of the final product making similar not to a natural mineral water but rather to a mineral water not present in nature constituting a food supplement.

From a chemical point of view the exact amount of CO₂ required to prevent the precipitation of Calcium Carbonate requires:
the prior determination of the Calcium ion concentration to be solubilised;
the analytical evaluation of the following balances:
   first and second dissociation of the carbonic acid;
   ionic product of the water;
   solubility product of the CaCO₃;
   the correct setting of the mass balance and charge balance of the system;
   the determination of the total ionic strength of the concentrate to be prepared and the estimation, according to a suitable model, of the activity coefficients of all the ionic species involved.

At this point, using an iterative method, by varying the CO₂ content, it is possible to calculate the corresponding activity of the hydrogen ion, and from this the distribution of the free species of carbonate, hydrogen carbonate and carbon dioxide are calculated, in order to identify the minimum content of CO₂ able to prevent the formation of Calcium Carbonate precipitate.

Thus this method enables the estimation of a different minimum amount of CO₂ for each desired type of water to be sold on the market.

The liquid concentrate prepared in the mixer after UV sterilization can be packaged in doses, particularly in capsules or bags, to be used by special devices directly on site where the mineral water is produced and consumed.

The mineral water is produced and delivered by special equipment which dilutes the liquid concentrate with sterilized demineralized water.

The dilution ratio is between 1:10 and 1:60; in particular it is approximately 1:20 for doses in capsules and about 1:50 for doses in bags.

The process for the preparation of a liquid concentrate thus conceived is susceptible to numerous modifications and variants, all falling within the sphere of the inventive concept; in addition, all details can be replaced by technically equivalent elements.

In practice, the materials used as well as the dimensions may be varied depending on the requirements and the state of the art.

## Claims

1. A process for preparing a dilutable liquid concentrate for obtaining water destined to human consumption and having the characteristics of a natural mineral water or not present in nature, **characterized in that** it comprises the following phases:
• saturation with CO₂ of a first quantity of demineralized and sterilized water
• enrichment with Calcium Bicarbonate of said first quantity of water saturated with CO₂. implemented by adding the species of Calcium as salt or as Calcium hydroxide, and only thereafter Sodium and/or Potassium Bicarbonates in said first quantity of water saturated with CO₂.
• dissolution of other mineral salts in said first quantity of water saturated with CO₂
• dilution of the first quantity of water saturated with CO₂ and having all desired mineral salts comprising the Calcium Bicarbonate with a second quantity of demineralized and sterilized water in order to obtain a liquid concentrate having a concentration of CO₂ at least sufficient to prevent the precipitation of Calcium Carbonate from the Calcium Bicarbonate.

2. The process for preparing a liquid concentrate according to claim 1, **characterized in that** said liquid concentrate before its final packaging is sterilized with UV rays.

3. The process for preparing a liquid concentrate according to any of preceding claims, **characterized in that** said dilution phase is realized in an hermetically closed mixer in which a slight head of CO₂ is created above the solution.

4. The process for preparing a liquid concentrate according to any of preceding claims, **characterized in that** for the calculation of the minimum quantity of CO₂ necessary to prevent the precipitation of Calcium Carbonate the concentration is previously established of the Calcium ion which one wants to solubilise, the balances being analytically evaluated of the first and second dissociation of the carbonic acid, of the ionic product of the water and of the solubility product of CaCO₃, the mass and charge balances of the system being set, the ionic total force being determined of the concentrate which one wants to prepare and one proceeds with the estimation, according to an suitable model, of the activity coefficients of all involved ionic species, and with an iterative method the corresponding activity of the hydrogen ion is calculated, by varying the contents of CO₂, and from this the distribution of the free species of carbonate, hydrogen-carbonate and carbon dioxide.

## Patentansprüche

1. Verfahren zur Herstellung eines verdünnbaren, flüssigen Konzentrats für den Erhalt von Trinkwasser mit den Eigenschaften eines natürlichen Mineralwassers oder eines Wassers, das nicht in der Natur vorhanden ist, **dadurch gekennzeichnet, dass** es folgende Phasen umfasst:
- Sättigung einer ersten Menge demineralisierten und sterilisierten Wassers mit CO₂;
- Anreicherung dieser ersten, mit CO₂ gesättigten Wassermenge mit Calciumhydrogencarbonat, implementiert durch das Hinzufügen der Calciumarten als Salz oder Calciumhydroxid und erst anschließend von Natrium- und/oder Kaliumbicarbonaten zu dieser ersten mit CO₂ gesättigten Wassermenge;
- Lösung anderer Mineralsalze in dieser ersten mit CO₂ gesättigten Wassermenge;
- Verdünnung dieser ersten mit CO₂ gesättigten Wassermenge, aufweisend alle gewünschten Mineralsalze, umfassend das Calciumhydrogencarbonat, mit einer zweiten Menge demineralisierten und sterilisierten Wassers, um ein flüssiges Konzentrat zu erhalten, aufweisend eine CO₂-Konzentration, die zumindest ausreichend ist, um die Fällung des Calciumcarbonats aus dem Calciumhydrogencarbonat zu vermeiden.

2. Verfahren zur Herstellung eines flüssigen Konzentrats nach Anspruch 1, **dadurch gekennzeichnet, dass** dieses flüssige Konzentrat vor seiner abschließenden Verpackung mit UV-Strahlen sterilisiert wird.

3. Verfahren zur Herstellung eines flüssigen Konzentrats nach einem der vorhergehenden Ansprüche, **dadurch gekennzeichnet, dass** diese Verdünnungsphase in einem hermetisch verschlossenen Mixer stattfindet, in dem eine geringe CO₂-Schicht über der Lösung erzeugt wird.

4. Verfahren zur Herstellung eines flüssigen Konzentrats nach einem der vorhergehenden Ansprüche, **dadurch gekennzeichnet, dass** die Konzentration für die Berechnung der Mindestmenge an CO₂, die notwendig ist, um die Fällung von Calciumcarbonat zu vermeiden, zuvor von den Calciumionen festgelegt wird, die gelöst werden sollen, wobei die Differenzen der ersten und der zweiten Dissoziation der Kohlensäure, des ionischen Produkts des Wassers und des Lösungsprodukts von CaCO₃ analytisch bewertet werden, die Massen- und Ladungsdifferenzen des Systems festgelegt werden, die gesamte Ionenkraft des Konzentrats, das hergestellt werden soll, bewertet wird, und man die Schätzung der Aktivitätskoeffizienten aller betroffenen Ionenarten nach einem geeigneten Modell vornimmt, wobei die entsprechende Wasserstoffionenaktivität durch eine iterative Methode berechnet wird, indem der CO₂-Gehalt variiert wird, und davon ausgehend die Verteilung freier Arten von Carbonat, Hydrogencarbonat und Kohlendioxid.

## Revendications

1. Procédé pour préparer un concentré liquide diluable afin d'obtenir une eau destinée à la consommation humaine et ayant les caractéristiques d'une eau minérale naturelle ou non présente en nature, **caractérisé en ce qu'**il comprend les étapes suivantes :
- saturation avec du CO₂ d'une première quantité d'eau déminéralisée et stérilisée
- enrichissement avec du bicarbonate de calcium de ladite première quantité d'eau saturée en CO₂, exécuté en additionnant des types de calcium tels que le sel ou l'hydroxyde de calcium, et uniquement après des bicarbonates de sodium et/ou de potassium dans ladite première quantité d'eau saturée en CO₂.
- dissolution d'autres sels minéraux dans ladite première quantité d'eau saturée en CO₂
- dilution de la première quantité d'eau saturée en CO₂ et ayant tous les sels minéraux requis comprenant le bicarbonate de calcium avec une seconde quantité d'eau déminéralisée et stérilisée afin d'obtenir un concentré liquide ayant une concentration de CO₂ au moins suffisante pour empêcher la précipitation du carbonate de calcium à partir du bicarbonate de calcium.

2. Procédé pour préparer un concentré liquide selon la revendication 1, **caractérisé en ce que** ledit concentré liquide est stérilisé aux rayons UV avant son emballage final.

3. Procédé pour préparer un concentré liquide selon l'une quelconque des revendications précédentes, **caractérisé en ce que** ladite étape de dilution est réalisée dans un mélangeur hermétiquement fermé dans lequel une petite charge de CO₂ est créée au-dessus de la solution.

4. Procédé pour préparer un concentré liquide selon l'une quelconque des revendications précédentes, **caractérisé en ce que** pour le calcul de la quantité minimum de CO₂ nécessaire pour empêcher la précipitation du carbonate de calcium, on établit à l'avance la concentration d'ion calcium que l'on souhaite solubiliser, les bilans de la première et de la seconde dissociation de l'acide carbonique, du produit ionique de l'eau et du produit de solubilité du CaCO₃ étant analytiquement évalués, les bilans de masse et ionique du système étant fixés, la force ionique totale du concentré que l'on souhaite préparer étant déterminée, et on procède à l'estimation, selon un modèle adapté, des coefficients d'activité de toutes les espèces ioniques impliquées et, avec un procédé itératif, on calcule l'activité correspondante de l'ion hydrogène, en variant les quantités de CO₂, et à partir de cela, la distribution des espèces libres de carbonate, de carbonate d'hydrogène et de dioxyde de carbone.
